(19) **Europäisches Patentamt / European Patent Office / Office européen des brevets**

(11) **EP 4 571 877 A1**

(12) **EUROPEAN PATENT APPLICATION**
published in accordance with Art. 153(4) EPC

(43) Date of publication:
**18.06.2025 Bulletin 2025/25**

(21) Application number: **22955047.0**

(22) Date of filing: **12.08.2022**

(51) International Patent Classification (IPC):
**H01M 4/24** (2006.01)    **H01M 4/38** (2006.01)
**H01M 4/42** (2006.01)    **H01M 4/48** (2010.01)
**H01M 4/62** (2006.01)    **H01M 4/70** (2006.01)
**H01M 10/28** (2006.01)    **H01M 50/119** (2021.01)
**H01M 50/531** (2021.01)    **H01M 50/545** (2021.01)

(52) Cooperative Patent Classification (CPC):
**H01M 4/24; H01M 4/38; H01M 4/42; H01M 4/48;
H01M 4/62; H01M 4/70; H01M 10/28;
H01M 50/119; H01M 50/531; H01M 50/545;**
Y02E 60/10; Y02P 70/50

(86) International application number:
**PCT/JP2022/030791**

(87) International publication number:
**WO 2024/034132 (15.02.2024 Gazette 2024/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FDK Corporation**
**Tokyo 108-8212 (JP)**

(72) Inventors:
• **YAMAGUCHI, Tomomichi**
**Tokyo 108-8212 (JP)**

• **SUZUKI, Soma**
**Tokyo 108-8212 (JP)**
• **MURASE, Satoshi**
**Tokyo 108-8212 (JP)**
• **ITO, Takeshi**
**Tokyo 108-8212 (JP)**
• **ENDO, Takahiro**
**Tokyo 108-8212 (JP)**

(74) Representative: **Tiburzi, Andrea et al**
**Barzanò & Zanardo Roma S.p.A.
Via Piemonte 26
00187 Roma (IT)**

(54) **NEGATIVE ELECTRODE FOR ZINC BATTERY, AND ZINC BATTERY**

(57) This negative electrode for a zinc battery comprises a nonporous current collector and a negative electrode mixture layer which is held by the current collector and contains at least one of zinc, a zinc alloy, and a zinc-containing compound. The negative electrode has a current collector-exposed section in which the negative electrode mixture layer is not disposed, in a portion located at the outermost circumferential surface when wound.

FIG. 2A

**(Cont. next page)**

FIG. 2B

FIG. 2C

**Description**

Technical Field

The present invention relates to a negative electrode for a zinc battery and a zinc battery.

Background Art

A zinc battery is a battery that uses zinc, zinc alloys or zinc-containing compounds in negative active materials. Examples of the battery using zinc or the like as a negative electrode active material include a primary battery and a secondary battery, and, for example, the following are known: an air zinc battery using oxygen in the air as a positive electrode active material, a nickel zinc battery using a nickel-containing compound as a positive electrode active material, a manganese zinc battery and a zinc-ion battery using a manganese-containing compound as a positive electrode active material, and a silver zinc battery using a silver-containing compound as a positive electrode active material.

Among these, the nickel zinc battery is a water-based battery that uses water-based electrolyte and is therefore safer than a non-water-based battery. Further, the combination of the zinc electrode and a nickel electrode has a high electromotive force as a water-based battery, thus the nickel zinc battery is also relatively inexpensive. Therefore, nickel zinc batteries are studied to be applied to industrial applications (for example, applications such as backup power sources) and automotive applications (for example, applications such as hybrid vehicles).

For example, PTL 1 discloses an alkaline zinc storage battery including a wound body in which a positive electrode containing nickel hydroxide or the like and a negative electrode containing a zinc oxide, a metal zinc, or the like are wound in a stacked state with a separator therebetween, and an outer can for housing the wound body. The negative electrode is disposed at the outermost peripheral surface of the wound body.

Citation List

Patent Literature

PTL 1
Japanese Patent Application Laid-Open No. S53-071234

Summary of Invention

Technical Problem

The zinc battery described in PTL 1 could not have sufficiently reduced self-discharge. That is, metallic zinc, which is the negative electrode active material of the negative electrode located at the outermost peripheral portion of the wound body, is spontaneously dissolved by contacting with an electrolyte. The generated electrons then moved to the outer can, and a local cell reaction occurred between the negative electrode active material and the inner wall surface of the outer can, which made self-discharge more likely to occur.

The present invention has been made based on the above-described circumstances, and an object thereof is to provide a negative electrode for a zinc battery and a zinc battery both capable of reducing self-discharge as compared with the related art.

Solution to Problem

The present invention provides a negative electrode for a zinc battery, the negative electrode being wound with a positive electrode in a stacked state with a separator therebetween, and housed within an outer can, the negative electrode including: a current collector that is non-porous; and a negative electrode mixture layer held by the current collector and containing at least one of zinc, a zinc alloy, and a zinc-containing compound, in which the negative electrode includes, in a portion thereof that is located at an outermost peripheral surface when the negative electrode is wound, a current collector exposed portion where the negative electrode mixture layer is not disposed and the current collector is exposed.

The present invention provides a zinc battery, including: a wound body in which a negative electrode and a positive electrode are wound in a stacked state with a separator therebetween; and an outer can that houses the wound body, in which the negative electrode includes a current collector that is non-porous, and a negative electrode mixture layer held by the current collector and containing at least one of zinc, a zinc alloy, and a zinc-containing compound; the negative electrode is disposed on an outermost peripheral surface of the wound body; and the negative electrode includes, in a portion thereof that is located at the outermost peripheral surface, a current collector exposed portion where the negative electrode mixture layer is not disposed and the current collector is exposed.

Advantageous Effects of Invention

The present invention can provide a negative electrode for a zinc battery and a zinc battery both capable of reducing self-discharge as compared with the related art.

Brief Description of Drawings

FIG. 1 is a partially cutaway perspective view illustrating a zinc battery according to an embodiment of the present invention; and
FIGS. 2A to 2C schematically illustrate a configuration of a negative electrode used in the zinc battery in FIG. 1.

Description of Embodiments

1. Zinc battery

As an exemplary zinc battery according to the embodiment, a nickel zinc battery will be described below.

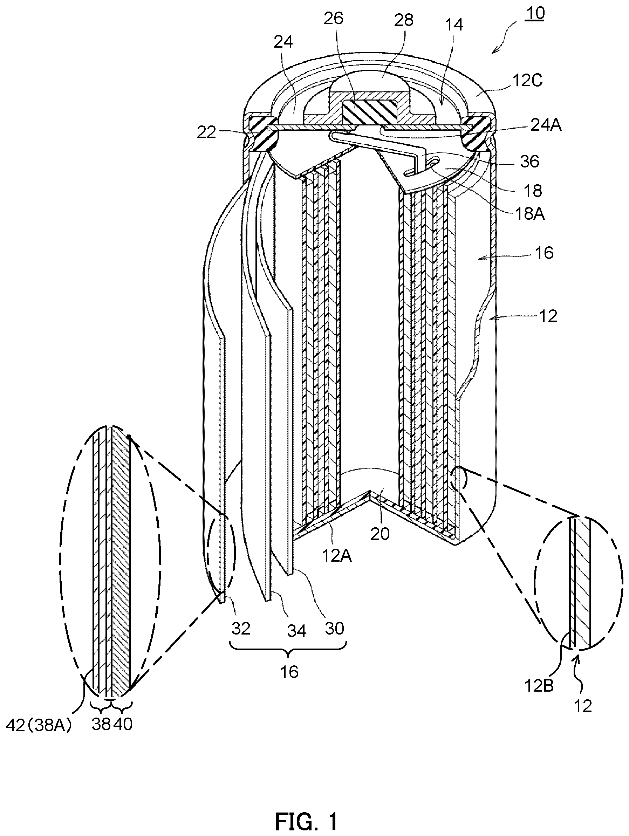

FIG. 1 is a partially cutaway perspective view illustrating zinc battery 10 according to an embodiment of the present invention. In FIG. 1, some portions of wound body 16 are omitted. In addition, the areas enclosed by the dashed dotted line illustrate enlarged cross-section of the areas.

As illustrated in FIG. 1, zinc battery 10 according to the embodiment is a cylindrical battery of FA size, and includes outer can 12, sealing body 14, wound body 16 (electrode group), an electrolyte (not illustrated), upper insulation member 18, and lower insulation member 20.

Outer can 12 is a container that houses wound body 16, and, in the present embodiment, is a container having a bottom and a cylindrical shape with an open upper end. Outer can 12 is conductive, and bottom wall 12A thereof functions as a negative electrode terminal.

The material of outer can 12 may be a conductive material having corrosion resistance to an electrolyte or an electrochemical reaction inside of the battery, and usually includes a metal material such as iron or steel. The inner wall surface of outer can 12 is preferably plated. In the present embodiment, the inner wall surface of outer can 12 includes plating film 12B. The metal of plating film 12B has a higher hydrogen overvoltage than the metal of the main body of outer can 12, and preferably has a higher hydrogen overvoltage than iron or steel. Examples of such a metal include nickel, tin, copper, indium, and bismuth. Among these, tin is preferable from the viewpoint of further reducing self-discharge. Although nickel does not exhibit a hydrogen overvoltage as high as tin, by adopting the configuration of the present invention, self-discharge can be satisfactorily reduced even when nickel is used.

Sealing body 14 is fixed to the opening of outer can 12 via insulation packing 22, and seals outer can 12 while providing a positive electrode terminal. Sealing body 14 includes lid plate 24, valve body 26, and positive electrode terminal 28.

Lid plate 24 is a conductive member having a disk shape and includes through-hole 24A at the center thereof. Insulation packing 22 has a ring shape surrounding lid plate 24, and is interposed between outer can 12 and sealing body 14. Insulation packing 22 is fixed to opening edge 12C of outer can 12 by crimping opening edge 12C of outer can 12. Thus, lid plate 24 and insulation packing 22 cooperate with each other to hermetically close the opening of outer can 12.

Valve body 26 is a member made of rubber, and is disposed on the outer surface of lid plate 24 so as to block through-hole 24A.

Positive electrode terminal 28 is a metal member having a cylindrical shape with a flange, and is electrically connected to the outer surface of lid plate 24 to cover valve body 26. Positive electrode terminal 28 presses valve body 26 toward lid plate 24. A gas vent hole (not illustrated) is opened to positive electrode terminal 28.

Further, in the normal operation, through-hole 24A is hermetically closed by valve body 26. When gas is generated within outer can 12 and the inner pressure thereof increases, on the other hand, valve body 26 is compressed by the inner pressure to open through-hole 24A, and as a result, the gas is released to the outside from the inside of outer can 12 through through-hole 24A and a gas vent hole (not illustrated) of positive electrode terminal 28. That is, through-hole 24A, valve body 26, and positive electrode terminal 28 form a safety valve for the battery.

Wound body 16 is an electrode group housed within outer can 12 and including positive electrode 30, negative electrode 32, and separator 34. Specifically, wound body 16 is an electrode group in which positive electrode 30 and negative electrode 32 are wound in a stacked state with separator 34 therebetween. More specifically, wound body 16 obtained by winding a laminate of separator 34, positive electrode 30, separator 34, and negative electrode 32 such that negative electrode 32 is on the outside.

Negative electrode 32 is disposed on the outermost peripheral surface of wound body 16, and negative electrode 32 is in contact with an inner wall surface of outer can 12. That is, negative electrode 32 and outer can 12, which is a negative electrode terminal, are electrically connected to each other. In the present embodiment, negative electrode 32 located on the outermost peripheral surface of wound body 16 (specifically, negative electrode current collector 38 exposed at current collector exposed portion 42 described below) is in direct contact with the inner wall surface of outer can 12; however the configuration is not limited thereto. A conductive member such as a metal sheet may be disposed between negative electrode 32 located on the outermost peripheral surface and the inner wall surface of outer can 12. However, from the viewpoint of reducing the internal resistance, no insulating coating film or insulating member is disposed between negative electrode 32 located on the outermost peripheral surface and the inner wall surface of outer can 12.

Meanwhile, positive electrode lead 36 is connected to positive electrode 30 of wound body 16. One end of positive electrode lead 36 is connected to positive electrode 30, and the other end of positive electrode lead 36 is connected to lid plate 24. Thus, positive electrode 30 and positive electrode terminal 28 are electrically connected to each other via positive electrode lead 36 and lid plate 24.

Upper insulation member 18 is disposed between wound body 16 and lid plate 24. Thus, negative electrode 32 of wound body 16 does not contact sealing body 14. Further, upper insulation member 18 includes slit 18A, and positive electrode lead 36 passes through slit 18A.

Lower insulation member 20 is disposed between wound body 16 and the bottom of outer can 12. Thus, positive electrode 30 of wound body 16 does not contact the inner wall surface of outer can 12.

The electrolyte (not illustrated) is alkaline electrolyte and is sealed in an outer can 12. Wound body 16 is impregnated with the alkaline electrolyte, and separator 34 mainly holds the alkaline electrolyte.

The alkaline electrolyte is preferably an aqueous solution containing at least one of KOH, NaOH and LiOH as a solute. The concentration of the alkaline electrolyte (solute concentration) is not particularly limited, but may be, for example, approximately 7N (approximately 30% by mass). In addition, in the present embodiment, it is preferable that the alkaline electrolyte is obtained by dissolving zinc oxide to a saturated concentration. This is to reduce the dissolution of zinc-ion from negative electrode to the electrolyte as much as possible.

In the following, each member in wound body 16 will be described.

(Positive electrode)

Positive electrode 30 includes a positive electrode current collector and a positive electrode mixture.

The positive electrode current collector may be a non-porous or porous current collector. The porous current collector is, for example, a current collector with a porous structure and is preferably a metallic body with a three-dimensional mesh-shaped skeleton. The skeleton of the metallic body spreads over the entire positive electrode collector, and the gaps in this skeleton form communicating holes. The communicating holes are filled with the positive electrode mixture. The material of the positive electrode current collector may be a metal material that is conductive and stable even at the positive electrode reaction potential, and is preferably nickel. That is, the positive electrode current collector may be nickel foam or a mesh-shaped, sponge-shaped, or fiber-shaped metal body made of nickel or subjected to nickel plating.

The positive electrode mixture is held by the positive electrode current collector and contains a positive electrode active material.

The positive electrode active material may be nickel hydroxide. The nickel hydroxide may be in the form of, for example, powder. The nickel hydroxide particles are preferably high-order nickel hydroxide particles. The nickel hydroxide particles preferably contain solid-solubilized Co, Zn, Cd, or the like.

Further, the nickel hydroxide particles are preferably covered with a surface layer containing a cobalt compound. The surface layer is preferably a high-order cobalt compound layer containing a cobalt compound having a valence of three or more. Examples of the cobalt compound having a valence of three or more include cobalt oxyhydroxide (CoOOH) having a valence of three or more. This is because a high-order cobalt compound layer containing such a high-order cobalt compound has excellent electrical conductivity and forms a conductive network.

The positive electrode mixture may further include a positive electrode additive and/or a binder in addition to the positive electrode active material.

Examples of the positive electrode additive include yttrium oxide; cobalt compounds such as cobalt oxide, cobalt metal, and cobalt hydroxide; zinc compounds such as metal zinc, zinc oxide, and zinc hydroxide; rare earth compounds such as erbium oxide; and niobium oxide.

The binder has a function of binding a positive electrode active material and a positive electrode additive to each other and of binding the positive electrode active material and the positive electrode additive to a positive electrode current collector. The binder may be a hydrophilic or hydrophobic polymer, and examples the binder include hydroxypropyl cellulose, carboxymethyl cellulose, sodium polyacrylate, and fluorine-based polymers (such as polytetrafluoroethylene (PTFE).

(Negative electrode)

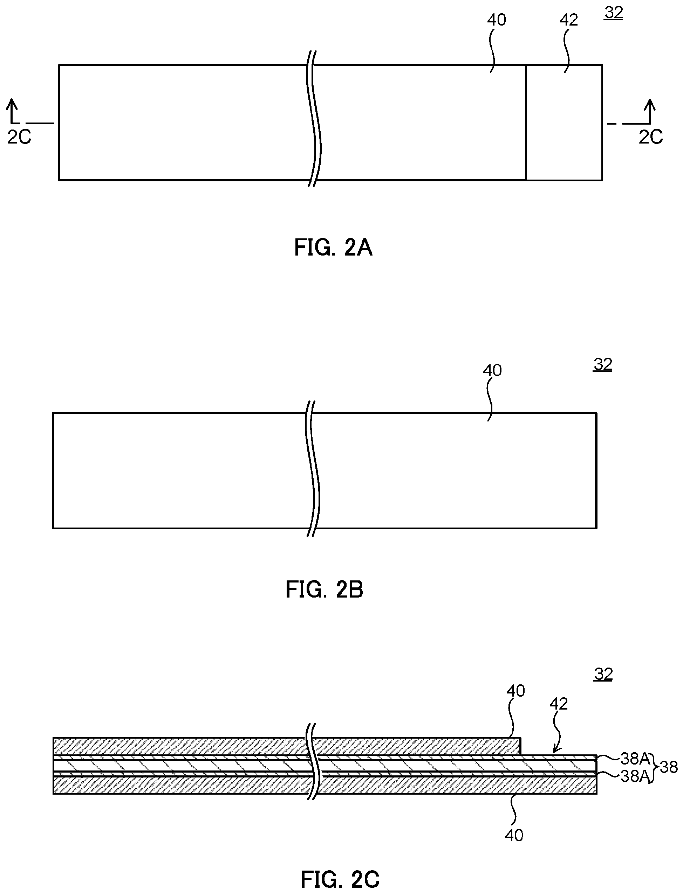

FIGS. 2A to 2C schematically illustrate band-shaped negative electrode 32 used in wound body 16 in FIG. 1. In FIG. 2A to 2C, FIG. 2A is a plan view of negative electrode 32, FIG. 2B is a bottom view of negative electrode 32, and FIG. 2C is a cross-sectional view taken along the line 2C-2C of negative electrode 32.

As illustrated in FIG. 2A to 2C, negative electrode 32 contains negative electrode current collector 38 and negative electrode mixture layer 40.

Negative electrode current collector 38 is a non-porous current collector, preferably a non-porous metal conductor having a sheet shape, that is, so-called non-porous foil. Herein, the term "non-porous" means that there is no hole extending between the front surface and the back surface of a sheet, and specifically, there is no hole throughout the entire sheet. The material of negative electrode current collector 38 may be a metal material that is conductive and stable even at the negative electrode reaction potential, and the examples of the material include copper, copper alloys (for example, brass), and iron, preferably copper. That is, negative electrode current collector 38 is preferably a copper foil.

The surface of negative electrode current collector 38 may be plated. In the present embodiment, negative electrode current collector 38 includes plating film 38A on the surface thereof (see FIG. 1). The metal of plating film 38A is a metal with a higher hydrogen overvoltage than the metal of the main body of negative electrode current collector 38, preferably a metal with a further higher hydrogen overvoltage, and more preferably a metal with a higher hydrogen overvoltage than copper, for example, tin. The presence of plating film 38A can inhibit local cell reactions between negative electrode current collector 38 and outer can 12 even when the electrolyte seeps into the outermost peripheral portion of wound body 16 or zinc dissolves therein, thereby further reducing self-discharge.

The thickness of negative electrode current collector 38 is not particularly limited, but is, for example, 20 to 65 $\mu$m. By setting the thickness of negative electrode current collector 38 to 20 $\mu$m or more, defects of the negative electrode current collector 38, for example, at the outermost peripheral portion, caused by deformation of negative electrode mixture layer 40 disposed on the surface opposite the inner wall surface of outer can 12 during charge and discharge can be further reduced. By setting the thickness of negative electrode current collector 38 to 65 $\mu$m or less, the amount of the negative electrode mixture filled in outer can 12 can be made less likely to decrease.

Negative electrode mixture layers 40 are disposed on the surfaces on both sides of negative electrode current collector 38, respectively (see FIG. 2C). As described above, negative electrode 32 is disposed on the outermost peripheral surface when wound body 16 is formed. Negative electrode 32 includes, in a portion thereof located at the outermost peripheral surface, current collector exposed portion 42 where the negative electrode mixture layer 40 is not disposed (see FIG. 2A).

Current collector exposed portion 42 is a portion where the surface of negative electrode current collector 38 (the surface of plating film 38A in the present embodiment) is exposed and where no resin coating film or the like is disposed. Current collector exposed portion 42 is provided in a portion located at outermost peripheral surface when wrapped around, and may be provided only in a portion of the outermost peripheral surface of wound body 16 or on the entire outermost peripheral surface. From the viewpoint of further reducing the self-discharge, current collector exposed portion 42 is provided at least in a portion (for example, 50% or more) and preferably on the entire outermost peripheral surface of wound body 16. In the present embodiment, negative electrode current collector 38 exposed at current collector exposed portion 42 is in direct contact with the inner wall surface of outer can 12.

The negative electrode mixture of negative electrode mixture layer 40 contains a negative electrode active material.

The negative electrode active material contains at least one of zinc, a zinc alloy, and a zinc-containing compound. Examples of the metal of the zinc alloy include bismuth, aluminum, and indium, in addition to zinc. Examples of the zinc-containing compound include zinc oxides (grade 1/ grade 2/ grade 3), zinc hydroxide, zinc sulfides, tetrahydroxyzinc ion salts, zinc halides, zinc carboxylate compounds such as zinc acetate, zinc tartrate, and zinc oxalate, zinc magnesium, calcium zincate, barium zincate, zinc borate, zinc silicate, zinc aluminate, zinc fluoride, zinc carbonate, zinc hydrogen carbonate, zinc nitrate, and zinc sulfate. Among them, the negative electrode active material preferably contains zinc oxide, and more preferably contains zinc oxide and zinc. This inclusion of zinc not only allows zinc to function as a discharge reserve, for example, but also may further reduce the internal resistance of zinc battery due to its lower resistance.

The negative electrode active material is, for example, in the form of a powder. The particle size of the particles of negative electrode active material is not particularly limited, but when zinc or a zinc alloy is used, the average particle size is preferably 10 to 1000 $\mu$m, and when a zinc-containing compound is used, it is preferably 0.1 to 100 $\mu$m. The average particle size means average particle size at which the cumulative value by mass is 50%, and is measured by a laser diffraction/scattering method using a particle size distribution measuring apparatus.

The negative electrode mixture may further contain a negative electrode additive and/or a binder in addition to the negative electrode active material.

The negative electrode additive improves the characteristics of the negative electrode, specifically, reduces the elution of the negative electrode active material into the electrolyte, and examples of the negative electrode additive include bismuth oxide, bismuth hydroxide, indium oxide, indium hydroxide, potassium oxalate, and hydrates thereof. For example, when potassium oxalate and/or a hydrate thereof is eluted into the electrolyte, the potassium oxalate and/or the hydrate thereof dissociates into oxalate ions. As a result, zinc ions eluted in the electrolyte forms a poorly soluble salt with the oxalate ions, and the poorly soluble salt covers the surface of the negative electrode active material, thereby reducing the contact between the metallic zinc of the negative electrode active material and the electrolyte. Therefore, the self-discharge is less likely to occur.

The binder has a function of binding a negative electrode active material and a negative electrode additive to each other and further has a function of binding the negative electrode active material, the negative electrode additive, and the like to a negative electrode current collector. Examples of the binder include hydroxypropyl cellulose, carboxymethyl cellulose, polyvinyl alcohol, polyvinylpyrrolidone, polyacrylic acid, sodium polyacrylate, polyimide, polyamideimide, polyamide, styrene-butadiene rubber, polyethylene oxide, polytetrafluoroethylene, polyvinylidene fluoride, perfluoroalkoxy fluorine resin, and copolymers of tetrafluoroethylene and hexafluoropropylene.

Among them, a styrene-butadiene rubber is preferable from the viewpoints that the rubber has a high binding effect and an alkali resistance. In particular, a non-porous current collector is used as negative electrode current collector 38 in the present invention, and thus it is difficult to obtain adhesion between the negative electrode mixture and the current collector as compared to a porous current collector. Even in such cases, by using the styrene-butadiene rubber as the binder, a satisfactory binding property is more likely to be obtained even for a non-porous current collector.

The content of the binder may be any value such that negative electrode mixture layer 40 can be sufficiently bound to negative electrode current collector 38, but in the case of the styrene-butadiene rubber, for example, the content may be 1 to 5% by mass, preferably 1 to 3% by mass, based on the total amount of negative electrode mixture.

(Separator)

As described above, separator 34 is disposed between positive electrode 30 and negative electrode 32 (see FIG. 1). Examples of separator 34 include nonwoven fabric separators and dendrite-resistant separators.

Examples of the nonwoven fabric separators include separators obtained by adding hydrophilic functional groups to nonwoven fabrics made of polyamide fibers, and separators obtained by adding hydrophilic functional groups to nonwoven fabrics made of polyolefin fibers such as polyethylene or polypropylene. Among these, polyolefin fiber nonwoven fabrics to which sulfonation treatment has been applied to add sulfonic groups are preferred. The sulfonic groups are added by treating nonwoven fabrics with acid containing sulfonic groups, such as sulfuric acid or fuming sulfuric acid. Batteries using separators containing fibers having such sulfonic groups are more likely to reduce self-discharge.

Examples of the dendrite-resistant separators include polyolefin-based microporous films, such as polyethylene or polypropylene.

One type or a combination of two or more types of separator 34 may be used. For example, as separator 34, a laminate of a nonwoven fabric separator and a dendrite-resistant separator (preferably obtained by subjecting a polyolefin-based microporous film to a hydrophilization treatment) may be used.

Next, the action of zinc battery 10 according to the embodiment will be described.

The above zinc battery 10 includes, as an electrode group, wound body 16 in which positive electrode 30 and negative electrode 32 are stacked with a separator 34 therebetween and wound. Negative electrode 32 is disposed on the outermost peripheral surface of the wound body 16; negative electrode 32 includes, in the portion thereof located at the outermost peripheral surface, current collector exposed portion 42 where the negative electrode mixture layer 40 is not disposed and the negative electrode current collector 38 is exposed.

This configuration can reduce the elution of zinc ions from negative electrode mixture layer 40 in contact with the inner wall surface of outer can 12, and can reduce local cell reactions between negative electrode 32 and the inner wall surface of outer can 12, thereby reducing the self-discharge.

In particular, in the above embodiment, a predetermined plating film 12B is disposed on inner wall surface of outer can 12. Even when plating film 12B contains a metal having a not very high in hydrogen overvoltage, such as nickel, the self-discharge can be highly reduced by providing current collector exposed portion 42.

In addition, plating film 38A containing a metal having a relatively high hydrogen overvoltage is disposed on the surface of negative electrode current collector 38. This configuration makes it possible to further reduce local cell reactions even in the vicinity of the negative electrode current collector 38, thereby further reducing the self-discharge.

2. Method for manufacturing zinc battery

The above zinc battery can be manufactured by any method. For example, a zinc battery can be manufactured through the following steps: 1) preparing electrodes (positive electrode and negative electrode); and 2) obtaining a zinc battery by using the prepared electrodes.

Step 1)

In the present step, electrodes (positive electrode and negative electrode) are obtained.

Specifically, an active material and an optional additive and/or binder are mixed or kneaded with a solvent (for example, water) to obtain a mixture slurry. Then, the mixture slurry is applied on or allows to fill a current collector, dried, and further rolled as needed to form a mixture layer. Such rolling increases the packing density of the active material in the mixture layer.

For example, positive electrode 30 can be manufactured as follows.

First, a positive electrode active material powder, a positive electrode additive, a binder, and water are mixed and kneaded to prepare positive electrode mixture slurry. Then, the obtained positive electrode mixture slurry is allowed to fill, for example, nickel foam (current collector), and then dried and rolled to form a positive electrode mixture layer. The obtained positive electrode sheet is then cut to a predetermined size to obtain positive electrode 30.

For example, negative electrode 32 can be manufactured as follows.

First, a negative electrode active material powder, a negative electrode additive, a binder, and water are kneaded to prepare a negative electrode mixture. The obtained negative electrode mixture slurry is applied to the surfaces on both sides of a negative electrode current collector. At this time, the negative electrode mixture slurry is not applied to a portion (of the negative electrode current collector) which would be located on the outermost peripheral surface when the wound body is formed. Then, the negative electrode mixture slurry coated on the negative electrode current collector is dried and then rolled to form a negative electrode mixture layer. The obtained negative electrode sheet is then cut to a predetermined size to obtain negative electrode 32.

Step 2)

In the present step, a zinc battery is produced by using the prepared electrodes.

Specifically, a wound body is produced in which the prepared positive electrode 30 and negative electrode 32 are wound in a stacked state with separator 34 therebetween. Positive electrode lead 36 is welded to one end of positive electrode 30 in the longitudinal direction of the positive electrode. Subsequently, for example, separator 34, positive electrode 30, separator 34, and negative electrode 32 are stacked in this order and wound along the longitudinal direction such that negative electrode 32 is located on the outside, thereby obtaining wound body 16.

After housing obtained wound body 16 in outer can 12 and injecting the electrolyte into outer can 12, the opening portion of outer can 12 is sealed with sealing body 14.

After leaving the obtained battery for a predetermined time, activation processing is performed by charging the battery under the predetermined condition. The activation condition can be adjusted according to the characteristics of the electrode active materials (positive electrode active material and negative electrode active material). Zinc battery 10 thus can be obtained.

3. Variation

In the above embodiment, outer can 12 has a cylindrical shape as an example, but the shape is not limited to cylindrical and may have a prismatic shape.

In the above embodiment, plating film 12B is disposed on the inner wall surface of outer can 12 and plating film 38A is disposed on the surface of negative electrode current collector 38 as an example, but these can be omitted.

In addition, in the above embodiment, a nickel zinc battery (for example, a nickel zinc secondary battery) was described as an example of a zinc battery, but the battery is not limited to the nickel zinc battery, and may also be an air zinc battery (for example, an air zinc secondary battery), a silver-zinc battery (for example, a silver-zinc secondary battery), or the like.

Examples

Hereinafter, the invention will be described with reference to Examples. The scope of the present invention is not interpreted to be limited by the Examples.

1. Battery production and evaluation

< Example 1>

(Production of positive electrode)

(1) Preparation of positive electrode active material

Nickel sulfate, zinc sulfate, and cobalt sulfate were weighed out so that the amount of zinc was 4.0 parts by mass and the amount of cobalt became 1.0 parts by mass based on 100 parts by mass of nickel hydroxide, and weighed substances were added to 1 mol/L of an aqueous sodium hydroxide solution containing ammonium ions, thereby preparing a mixed aqueous solution. While stirring the obtained mixed aqueous solution, 1mol/L of an aqueous sodium hydroxide solution was gradually added to the mixed aqueous solution to cause a reaction, and the pH during the reaction was stabilized at 11 to obtain base particles mainly composed of nickel hydroxide with solid-solubilized Zn and Co.

The obtained base particles were washed 3 times with 10 times the amount of pure water, and then subjected to dehydration and drying treatment. The particle size of the obtained base particles was measured using a laser diffraction/scattering type particle size distribution measuring apparatus, and the average particle size at which the cumulative value by mass is 50% was 8 $\mu$m.

Next, the obtained base particles were charged into an aqueous cobalt sulfate solution, and while stirring this aqueous cobalt sulfate solution, 1mol/L of an aqueous sodium hydroxide solution was gradually dropped to cause a reaction, and the pH during the reaction was maintained at 11 to obtain a precipitate. The precipitate formed was then filtered off, washed with pure water, and then vacuum dried. As a result, intermediate product particles including a layer containing 5% by mass of cobalt hydroxide on the surface of the base particles was obtained. The thickness of the cobalt hydroxide layer was approximately 0.1 $\mu$m.

The intermediate product particles were then charged into 25% by mass of an aqueous sodium hydroxide solution. Here, when P is defined as the mass of the aggregate of the intermediate product particles, and Q is defined as the mass of the aqueous sodium hydroxide solution, the ratio of the masses namely P:Q was set to be 1:10. Then, the aqueous sodium hydroxide solution to which the intermediate product powder had been added was subjected to heat treatment in which the temperature was kept constant at 85°C for 8 hours while the aqueous sodium hydroxide solution is stirred.

The intermediate product particles subjected to the heat treatment were washed with pure water and dried by applying hot air at 65°C. As a result, an aggregate of positive electrode active material particles (positive electrode active material powder), in which a surface layer containing highly-ordered cobalt oxide is on the surface of base particles including Zn and Co solid-solubilized therein, were obtained.

(2) Preparation of positive electrode mixture slurry

To 100 parts by mass of the obtained positive electrode active material powder, 0.5 parts by mass of yttrium oxide powder, 0.3 parts by mass niobium oxide powder, 0.5 parts by mass of zinc oxide powder, and 30.0 parts by mass of water containing 0.2% by mass of hydroxypropylcellulose powder as a binder were added and kneaded to prepare positive electrode mixture slurry.

(3) Production of positive electrode

The positive electrode active material slurry was allowed to fill a sheet-shaped nickel foam (current collector) having an areal density (weight per unit area) of approximately 350 g/m$^2$, a porosity of 95%, and a thickness of 1.3 mm, and then dried and rolled. The resultant was then cut to a predetermined size to produce a nickel positive electrode plate with a capacity of 2000 mAh per sheet.

(Production of negative electrode)

A negative electrode active material slurry was produced by mixing 100 parts by mass of zinc oxide powder, 25 parts by mass of zinc alloy powder, 3 parts by mass of bismuth oxide powder, 0.1 parts by mass of indium oxide powder, 2 parts by mass of potassium oxalate monohydrate powder, 1 parts by mass of hydroxypropyl cellulose powder, 8 parts by mass of styrene-butadiene rubber aqueous dispersion (50% solution), and 100 parts by mass of water.

The negative active material slurry was applied to both surfaces of a 38 $\mu$m thick non-porous copper foil (current collector) with tin-plating on its surface. During the application of the slurry, the slurry was applied on the entire surface of the non-porous foil on one side, and on the other side, the slurry was applied only on a portion that faces positive electrode but not applied to a portion that is located on the outermost peripheral surface of the wound body (the outermost peripheral surface that contacts the inner wall surface of the outer can), thereby exposing the negative electrode current collector. After drying, the electrode plate was rolled with a rolling roll. The resultant was then cut to a predetermined size to produce a zinc negative electrode plate with a capacity of 4500 mAh per sheet.

(Production of electrolyte)

An aqueous solution containing an alkali-metal hydroxide as a solute and saturated with zinc oxide was prepared to obtain an alkali electrolyte. The alkaline electrolyte was a mixed solution of KOH and LiOH, and had a mass ratio namely KOH:LiOH of 6:0.5 and a specific gravity of 1.31.

(Production of battery)

The positive electrode plate and negative electrode plate prepared above were wound together with a nonwoven fabric separator and a dendrite-resistant separator (polyolefin-based microporous membrane). Specifically, a laminate (in which the above components were stacked in the order of non-woven separator and dendrite resistant separator/positive electrode plate/non-woven separator and dendrite resistant separator/negative electrode plate) was wound. As a result, a wound body was obtained in which the positive and negative plates were wound in a stacked state with the separator therebetween, and the negative plate was disposed at the outermost peripheral surface.

The obtained wound body was housed in a cylindrical outer can (made of iron) with nickel plating applied to the inner wall surface of the outer can. Next, a predetermined amount of the electrolyte prepared above was poured into the outer can to produce a cylindrical nickel zinc battery with a nominal capacity of 2000 mAh.

Then, the obtained battery was charged to 100% of the nominal capacity followed by one cycle to discharge to 1.3V for activation.

< Comparative example 1>

(Production of negative electrode)

A zinc negative electrode plate was produced in the same manner as in Example 1, except that, during the application of the slurry, the slurry was applied to the entire surface of the non-porous foil on one side and also to the entire surface of the non-porous foil on the other side.

(Production of battery)

A cylindrical shape nickel zinc battery was produced in the same manner as in Example 1 except that the negative electrode plate prepared above was used.

< Evaluation >

The residual rate of discharge capacity was determined for the batteries produced above by the following methods.

(Residual rate of discharge capacity)

After a nickel zinc battery prepared above was charged to 100% of the nominal capacity, the battery was cycled 3 times to discharge to 1.3V, the discharge capacity at the third cycle was used as the initial discharge capacity [A].

Next, the nickel zinc battery was charged again to 100% of the nominal capacity, and left for one month in an environment of 35°C, after which the battery was discharged to 1.3 V, and the discharge capacity at that time was used as the residual capacity [B].

The measured initial discharge capacity [A] and residual capacity [B] were applied to the following equation to calculate the residual rate.

$$\text{Equation (1): Residual rate (\%)} = (\text{Residual capacity [B] / Initial capacity [A]}) \times 100$$

The evaluation results are shown in Table 1.

[Table 1]

| | | Example 1 | Comparative example 1 |
|---|---|---|---|
| Configuration | Current collector exposed portion | Yes | No |
| | Plating type on inner wall surface of outer can | Nickel | Nickel |
| Evaluation | Initial discharge capacity [A] (mAh) | 1952 | 1956 |
| | Residual capacity [B] (mAh) | 1599 | 1424 |
| | Residual rate [B] / [A] (%) | 81.9 | 72.8 |

As shown in Table 1, it can be seen that the battery in Example 1 including a current collector exposed portion has a significantly higher residual rate of discharge capacity than the battery in Comparative example 1 including no current collector exposed portion. From the result, it can be seen that the self-discharge is reduced by providing a current collector exposed portion.

< Example 2>

A cylindrical nickel zinc battery was produced in the same manner as in Example 1, except that the obtained wound body was housed in a cylindrical outer can having a tin-plated inner wall surface.

< Comparative example 2>

A cylindrical nickel zinc battery was produced in the same manner as in Comparative example 1, except that the obtained wound body was housed in the cylindrical outer can having a tin-plated inner wall surface.

< Evaluation >

The residual rate of discharge capacity was evaluated in the same manner as described above for the above produced batteries. The evaluation results are shown in Table 2.

[Table 2]

| | | Example 2 | Comparative example 2 |
|---|---|---|---|
| Configuration | Current collector exposed portion | Yes | No |
| | Plating type on inner wall surface of outer can | Tin | Tin |
| Evaluation | Initial discharge capacity [A] (mAh) | 1962 | 1956 |
| | Residual capacity [B] (mAh) | 1731 | 1696 |
| | Residual rate [B] / [A] (%) | 88.2 | 86.7 |

As shown in Table 2, it can be seen that the battery in Example 2 including a current collector exposed portion has a significantly higher residual rate of discharge capacity than the battery in Comparative example 2 including no current collector exposed portion.
It is also clear that the residual rate is further increased by using tin as the metal type for the plating film on the inner wall surface of the outer can compared to using nickel as the metal type (comparison between Examples 1 and 2). This result shows that self-discharge can be further reduced by using tin as the metal type for the plating film on the inner wall surface of the outer can.

Industrial Applicability

The present invention can provide a negative electrode for a zinc battery and a zinc battery both capable of reducing self-discharge as compared with the related art.

Reference Signs List

10 Zinc battery
12 Outer can
12A Bottom wall
12B Plating film
12C Opening edge
14 Sealing body
16 Wound body (electrode group)
18 Upper insulation member
20 Lower insulation member
22 Insulation packing
24 Lid plate
26 Valve body
28 Positive electrode terminal
30 Positive electrode
32 Negative electrode
34 Separator
36 Positive electrode lead
38 Negative electrode current collector
38A Plating film
40 Negative electrode mixture layer
42 Current collector exposed portion

**Claims**

1. A negative electrode for a zinc battery, the negative electrode being wound with a positive electrode in a stacked state with a separator therebetween, and housed within an outer can, the negative electrode comprising:

   a current collector that is non-porous; and
   a negative electrode mixture layer held by the current collector and containing at least one of zinc, a zinc alloy, and a zinc-containing compound,
   wherein
   the negative electrode includes, in a portion thereof that is located at an outermost peripheral surface when the negative electrode is wound, a current collector exposed portion where the negative electrode mixture layer is not disposed and the current collector is exposed.

2. The negative electrode according to claim 1, wherein:

   the negative electrode mixture layer further contains a binder; and
   the binder contains styrene-butadiene rubber.

3. A zinc battery, comprising:

   a wound body in which a negative electrode and a positive electrode are wound in a stacked state with a separator therebetween; and
   an outer can that houses the wound body,
   wherein
   the negative electrode includes

      a current collector that is non-porous, and
      a negative electrode mixture layer held by the current collector and containing at least one of zinc, a zinc alloy, and a zinc-containing compound,

   the negative electrode is disposed on an outermost peripheral surface of the wound body, and
   the negative electrode includes, in a portion thereof that is located at the outermost peripheral surface, a current collector exposed portion where the negative electrode mixture layer is not disposed and the current collector is exposed.

**4.** The zinc battery according to claim 3, wherein:

the negative electrode mixture layer further contains a binder; and
the binder contains styrene-butadiene rubber.

**5.** The zinc battery according to claim 3, wherein
the current collector exposed at the current collector exposed portion is in direct contact with an inner wall surface of the outer can.

**6.** The zinc battery according to claim 3, wherein
the outer can includes a plating film of a metal having a higher hydrogen overvoltage than a metal of a main body of the outer can, the plating film being disposed on an inner wall surface of the outer can.

FIG. 1

40 42 32

FIG. 2A

40 32

FIG. 2B

32
40 42
38A 38
38A
40

FIG. 2C

# EP 4 571 877 A1

## INTERNATIONAL SEARCH REPORT

International application No.

**PCT/JP2022/030791**

| A. | CLASSIFICATION OF SUBJECT MATTER |
|---|---|

*H01M 4/24*(2006.01)i; *H01M 4/38*(2006.01)i; *H01M 4/42*(2006.01)i; *H01M 4/48*(2010.01)i; *H01M 4/62*(2006.01)i; *H01M 4/70*(2006.01)i; *H01M 10/28*(2006.01)i; *H01M 50/119*(2021.01)i; *H01M 50/531*(2021.01)i; *H01M 50/545*(2021.01)i
FI: H01M4/24 H; H01M4/38 Z; H01M4/42; H01M4/48; H01M4/62 C; H01M4/70 A; H01M10/28 A; H01M50/119; H01M50/531; H01M50/545

According to International Patent Classification (IPC) or to both national classification and IPC

| B. | FIELDS SEARCHED |
|---|---|

Minimum documentation searched (classification system followed by classification symbols)

H01M4/00-84; H01M10/00-04, 06-34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | Microfilm of the specification and drawings annexed to the request of Japanese Utility Model Application No. 073499/1980 (Laid-open No. 174461/1981) (SANYO ELECTRIC CO., LTD.) 23 December 1981 (1981-12-23), claims, p. 2, lines 11, 12, p. 3, lines 11, 12 | 1-6 |
| Y | JP 3-503820 A (GATES ENERGY PRODUCTS INC.) 22 August 1991 (1991-08-22) claims, p. 3, lower left column, lines 17, 18, lower right column, lines 8-14 | 1-6 |
| Y | WO 2022/102032 A1 (NIPPON TELEGRAPH AND TELEPHONE CORP.) 19 May 2022 (2022-05-19) paragraphs [0043], [0082] | 2, 4 |
| Y | JP 2001-23680 A (HITACHI MAXELL LTD.) 26 January 2001 (2001-01-26) claims 1-2, paragraphs [0006], [0012], [0039] | 5 |
| Y | JP 2012-527733 A (POWERGENIX SYSTEMS, INC.) 08 November 2012 (2012-11-08) claims, paragraph [0029] | 6 |

☑ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **09 September 2022** | **20 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

16

**INTERNATIONAL SEARCH REPORT**

| International application No. |
|---|
| **PCT/JP2022/030791** |

**C.      DOCUMENTS CONSIDERED TO BE RELEVANT**

| Category* | Citation of document, with indication, where appropriate, of the relevant passages | Relevant to claim No. |
|---|---|---|
| Y | WO 2020/213741 A1 (MAXELL HOLDINGS LTD.) 22 October 2020 (2020-10-22) paragraphs [0031], [0110] | 6 |
| A | JP 60-37662 A (SANYO ELECTRIC CO., LTD.) 27 February 1985 (1985-02-27) entire text, all drawings | 1-6 |

Form PCT/ISA/210 (second sheet) (January 2015)

**EP 4 571 877 A1**

**INTERNATIONAL SEARCH REPORT**
**Information on patent family members**

International application No.

**PCT/JP2022/030791**

| Patent document cited in search report | | | Publication date (day/month/year) | Patent family member(s) | Publication date (day/month/year) |
|---|---|---|---|---|---|
| JP | 56-174461 | U1 | 23 December 1981 | (Family: none) | |
| JP | 3-503820 | A | 22 August 1991 | US 5106707 A<br>claims, column 4, lines 41-47, column 4, 2nd line from the bottom to column 5, line<br>WO 1991/001573 A1<br>EP 436004 A1<br>KR 10-1992-0702036 A | |
| WO | 2022/102032 | A1 | 19 May 2022 | (Family: none) | |
| JP | 2001-23680 | A | 26 January 2001 | US 6051333 A<br>claims, column 1, lines 42-52, column 3, lines 36-44 | |
| JP | 2012-527733 | A | 08 November 2012 | US 2010/0291439 A1<br>claims, paragraph [0037]<br>WO 2010/135331 A1<br>EP 2433325 A1<br>CN 102439764 A<br>KR 10-2012-0023806 A | |
| WO | 2020/213741 | A1 | 22 October 2020 | (Family: none) | |
| JP | 60-37662 | A | 27 February 1985 | (Family: none) | |

Form PCT/ISA/210 (patent family annex) (January 2015)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 53071234 A